# EUROPÄISCHE PATENTSCHRIFT

(11) **EP 3 262 288 B1**
(45) Veröffentlichungstag und Bekanntmachung des Hinweises auf die Patenterteilung: **19.12.2018**
(21) Anmeldenummer: 16700590.9
(22) Anmeldetag: 14.01.2016
(51) Int. Cl.: F02B 37/02, F01N 13/10, F02B 37/18

(54) **ANORDNUNG FÜR EINEN VERBRENNUNGSMOTOR MIT MEHREREN ZYLINDERN UND ABGASTURBOLADER, ABGASDRUCKWANDLER MIT MISCHROHR UND WASTEGATE SOWIE VERFAHREN ZUM BETREIBEN UND ZUR AUSLEGUNG EINER SOLCHEN ANORDNUNG**
ARRANGEMENT FOR AN INTERNAL COMBUSTION ENGINE HAVING A PLURALITY OF CYLINDERS AND EXHAUST TURBOCHARGER, EXHAUST GAS PRESSURE TRANSFORMER HAVING A MIXING TUBE AND A WASTEGATE, AND METHOD FOR OPERATING AND CONFIGURING SUCH AN ARRANGEMENT
DISPOSITIF POUR MOTEUR A COMBUSTION INTERNE ÉQUIPÉ DE PLUSIEURS CYLINDRES ET D'UN TURBOCOMPRESSEUR, D'UN CAPTEUR DE PRESSION DE GAZ D'ÉCHAPPEMENT COMPORTANT UN TUBE DE MÉLANGE ET D'UNE SOUPAPE DE DÉCHARGE AINSI QUE PROCÉDÉ DE FONCTIONNEMENT ET DE CONCEPTION D'UN TEL DISPOSITIF

(30) Priorität: 27.02.2015 DE 102015203554
(43) Veröffentlichungstag der Anmeldung: 03.01.2018
(73) Patentinhaber: Volkswagen Aktiengesellschaft, 38440 Wolfsburg (DE)
(72) Erfinder: GESSENHARDT, Christopher, 39356 Oebisfelde-Weferlingen (DE); KAWELKE, Peter, Isenbüttel 38550 (DE); SCHNÜCKEL, Christian, 38110 Braunschweig (DE); TOMECKI, Matthias, 38106 Braunschweig (DE)
(86) Internationale Anmeldenummer: PCT/EP2016/050604
(87) Internationale Veröffentlichungsnummer: WO 2016/134876

(56) Entgegenhaltungen:
- EP-A1- 2 295 769
- DE-A1-102008 039 085
- FR-A1- 2 479 330
- US-A- 5 072 583
- US-A1- 2011 302 917

## Beschreibung

Die Erfindung betrifft eine Anordnung für einen Verbrennungsmotor mit mehreren Zylindern und einem Abgasturbolader, einem zwischen Verbrennungsmotor und einer Turbine des Abgasturboladers angeordneten Abgasdruckwandler mit einem Mischrohr und einem die Turbine des Turboladers umgehenden Wastegate zum Ableiten von Abgasen ohne Durchströmung des Abgasturboladers.

Unter einem Abgasdruckwandler wird vorliegend insbesondere eine Zusammenführung von mindestens zwei Abgasleitabschnitten im Bereich einer Mündungsstelle in ein Mischrohr verstanden, bei welcher in den Abgasleitabschnitten vor dem Zusammentreffen der Abgasleitabschnitte ein düsenartiger Querschnittsverlauf (z.B. in Form einer kontinuierlichen Querschnittsverringerung) ausgebildet ist, um das durch die Abgasleitabschnitte strömende Fluid vor dem Zusammentreffen der Abgasleitabschnitte zu beschleunigen. Üblicherweise werden die Abgasleitabschnitte zu unterschiedlichen Zeitpunkten von einem Fluid (hier: Abgas des Verbrennungsmotors) durchströmt. Durch die düsenartige Ausbildung unmittelbar vor dem Mischrohr wird der dynamische Fluiddruck erhöht und gleichzeitig der statische Fluiddruck reduziert. Gleichzeitig ist die Geometrie im Bereich der Mündungsstelle so ausgebildet, dass sich eine Ablösung der Strömung ergibt, insbesondere von einer sich zwischen zwei düsenartigen Verjüngungen befindenden Wand der Abgasleitabschnitte (Trennwand). Durch einen wie vorstehend beschriebenen Abgasdruckwandler kann dem Effekt eines sogenannten Übersprechens entgegengewirkt werden, indem ein Impulsdurchtritt vor allem stromabwärts in Richtung des Mischrohres bewirkt wird. Unter Übersprechen wird eine (möglichst zu vermeidende) von einer ausströmenden Flut aus einem ersten Abgasleitabschnitt verursachte Druckausbreitung von einer Mündungsstelle in einen weiteren Abgasleitabschnittstromaufwärts in Richtung der Zylinder eines Verbrennungsmotors verstanden. Es ist mit einer unerwünschten Beeinflussung des Betriebsverhaltens verbunden, insbesondere bedingt durch eine verstärkte Rückströmung von Abgas aus dem Abgasdruckwandler zurück in den Brennraum eines Verbrennungsmotors. Dies wiederum führt zu einer erhöhten Restgasrate und bei Ottomotoren zu einer erhöhten Klopfneigung und einer Reduzierung des Verbrennungswirkungsgrades sowie des maximalen Drehmoments des Verbrennungsmotors.

Einige Beispiele von wie vorstehend beschriebenen Abgasdruckwandlern und damit kombinierten Bypassanordnungen sind in US 5,072,583 A beschrieben.

Aus DE 10 2013 204 570 A1 ist ein Turboladersystem mit einem ersten Turbolader umfassend eine erste Turbine und mit einem zweiten Turbolader umfassend eine zweite Turbine bekannt, wobei die erste Turbine in Fluidkommunikation mit einem ersten Zylinder eines Verbrennungsmotors steht und die zweite Turbine in Fluidkommunikation mit einem zweiten Zylinder des Verbrennungsmotors steht. Dabei ist ein gemeinsamer Bypasskanal mit einem daran gekoppelten Wastegate vorgesehen, der mit einem Einlass der ersten Turbine und mit einem Einlass der zweiten Turbine in Fluidkommunikation steht.

Die US 2011/302917 A1 offenbart eine Anordnung für einen Verbrennungsmotor mit mehreren Zylindern und Abgasturbolader, mit einem die Turbine des Abgasturboladers umgehenden Wastegate, wobei die Anordnung einen ersten Abgasleitabschnitt zum separaten Ableiten von Abgas aus einer ersten Teilmenge der Zylinder und mindestens einen zweiten Abgasleitabschnitt zum Ableiten von Abgas aus einer zweiten Teilmenge der Zylinder umfasst, wobei ein den Abgasturbolader umgehender erster Bypasskanal ausgebildet ist, wobei von dem mindestens zweiten Abgasleitabschnitt ein den Abgasturbolader umgehender zweiter Bypasskanal ausgebildet ist und wobei mindestens ein Steuer- und/oder Regelelement vorgesehen ist, mittels welchem die Durchflussmenge durch den ersten Bypasskanal und/oder durch den zweiten Bypasskanal steuerbar bzw. regelbar ist.

Der Erfindung liegt die Aufgabe zugrunde, eine Anordnung für einen Verbrennungsmotor mit mehreren Zylindern und einem Abgasturbolader, einem zwischen Verbrennungsmotor und einer Turbine des Abgasturboladers angeordneten Abgasdruckwandler mit einem Mischrohr und einem die Turbine des Turboladers umgehenden Wastegate zum Ableiten von Abgasen ohne Durchströmung des Abgasturboladers zur Verfügung zu stellen, mittels welcher die Restgasrate und der Abgasgegendruck über den gesamten Drehzahlbereich eines Verbrennungsmotors möglichst gering gehalten werden. Ferner sollen ein Verfahren zum Betreiben einer Anordnung und ein Verfahren zur Auslegung einer solchen Anordnung zur Verfügung gestellt werden.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Anordnung für einen Verbrennungsmotor mit mehreren Zylindern und Abgasturbolader umfasst einen zwischen Verbrennungsmotor und einer Turbine des Abgasturboladers angeordneten Abgasdruckwandler mit einem Mischrohr sowie ein die Turbine des Abgasturboladers umgehendes Wastegate. Dabei weist die Anordnung einen ersten Abgasleitabschnitt zum separaten Ableiten von Abgas aus einer ersten Teilmenge der Zylinder zu dem Mischrohr und mindestens einen zweiten Abgasleitabschnitt zum Ableiten von Abgas aus einer zweiten Teilmenge der Zylinder zu dem Mischrohr auf, wobei in dem ersten Abgasleitabschnitt und in dem zweiten Abgasleitabschnitt in einem jeweiligen Endbereich vor dem Mischrohr jeweils ein düsenartiger Abschnitt ausgebildet ist, wobei von dem ersten Abgasleitabschnitt vor oder in dem düsenartigen Abschnitt ein den Abgasturbolader umgehender erster Bypasskanal ausgebildet ist, wobei von dem mindestens zweiten Abgasleitabschnitt vor oder in dem düsenartigen Abschnitt ein den Abgasturbolader umgehender zweiter Bypasskanal ausgebildet ist und wobei mindestens ein Steuer- und/oder Regelelement vorgesehen ist, mittels welchem die Durchflussmenge durch den ersten Bypasskanal und/oder durch den zweiten Bypasskanal steuerbar bzw. regelbar ist. Mit den vorstehend genannten Teilmengen der Zylinder ist insbesondere gemeint, dass die Gesamtzahl der Zylinder des Verbrennungsmotors in eine Teilmenge aufgeteilt wird und jede Teilmenge dann einem bestimmten Abgasleitabschnitt zugeordnet ist. Beispielsweise können vier Zylinder eines 4-Zylindermotors in zwei Teilmengen mit jeweils zwei Zylindern aufgeteilt werden (z.B. Teilmenge 1: Zylinder Z1 und Z4; Teilmenge 2: Zylinder Z2 und Z3), wobei die erste Teilmenge der Zylinder mit dem ersten Abgasleitabschnitt verbunden ist und die zweite Teilmenge mit dem zweiten Abgasleitabschnitt verbunden ist. Die erfindungsgemäße Anordnung hat den Vorteil, dass sich aufgrund der speziellen Gestaltung mit einem ersten Bypasskanal und einem mindestens zweiten Bypasskanal, welche über das Steuer- und/oder Regelelement steuerbar bzw. regelbar sind, die Möglichkeit ergibt, die als Drosselstellen wirkenden düsenartigen Abschnitte des Abgasdruckwandlers und gleichzeitig die Turbine des Abgasturboladers zu umgehen. Die Umgehung der Turbine des Abgasturboladers wird auch als Wastegate bezeichnet. Über die Bypasskanäle strömendes Abgas wird stromabwärts der Turbine des Abgasturboladers, insbesondere in eine Abgasanlage, eingeleitet. Mit Hilfe des Steuer- und/oder Regelelements kann somit einerseits der Ladedruck des Abgasturboladers gesteuert und andererseits der Abgasdruckwandler entdrosselt werden. Ausgehend von dieser Anordnung kann die Geometrie des Abgasdruckwandlers, insbesondere die geometrische Gestaltung der Verjüngung, hinsichtlich eines bestimmten Punkts des Motorkennfeldes optimiert werden, z.B. in Bezug auf den Low-End-Torque Punkt (LET-Punkt). Ausgehend von dieser Geometrie können die Bypasskanäle (d.h. der erste Bypasskanal, der mindestens zweite Bypasskanal und etwaige weitere Bypasskanäle) unter Berücksichtigung der Nennleistung des Verbrennungsmotors optimiert werden. Vorzugsweise wird für die Bypasskanäle ein ausreichend groß dimensionierter Querschnitt gewählt, damit bei maximal gewünschter Entdrosselung ein ausreichender Abgas-Volumenstrom über die Bypasskanäle strömen kann. Die Steuerung und/oder Regelung der Durchflussmenge kann dann bedarfsweise über das Steuerelement und/oder Regelelement erfolgen. Mit der erfindungsgemäßen Anordnung kann ferner die Restgasrate, insbesondere im Teillastbetrieb des Verbrennungsmotors durch Variation des Steuerelements bzw. Regelelements eingestellt werden. Dadurch kann die Ladungswechselarbeit der einzelnen Zylinder reduziert werden. Mit der erfindungsgemäßen Anordnung kann ferner der Impuls des aus dem Mischrohr austretenden Abgasstromes in Richtung Turbine des Abgasturboladers maximiert und somit die Leistung des Abgasturboladers erhöht werden. Darüber hinaus wird der übertretende Abgasstoß zwischen der gerade ausströmenden (Abgas-)Flut und der gerade nicht ausströmenden Flut verringert. Dadurch wird der Abgasgegendruck in der nicht ausstoßenden Flut ebenfalls verringert. Zusammenfassend kann festgehalten werden, dass mit der erfindungsgemäßen Anordnung der Kennfeldbereich des Verbrennungsmotors, in welchem das (ungewünschte) Übersprechen der Auslassdruckwelle zwischen Zylindern unterschiedlicher Abgasleitschnitte effektiv reduziert wird, deutlich gegenüber aus dem Stand der Technik bekannten Lösungen ausgeweitet werden.

Bei geschlossenem Steuerelement bzw. Regelelement wird bei einer erfindungsgemäßen Anordnung im Bereich des Abgasdruckwandlers eine merkliche (und gewünschte) Ejektorwirkung erzielt, indem wie eingangs beschrieben statischer Druck zumindest teilweise in dynamischen Druck umgewandelt wird, um ein Übersprechen von einem Abgasleitabschnitt mit einer ausstoßenden Flut auf einen weiteren Abgasleitabschnitt entgegenzuwirken.

Bei geöffnetem Steuerelement bzw. Regelelement, insbesondere unter Volllast des Verbrennungsmotors, "läuft" die durch eine ausstoßende Flut verursachte Druckwelle durch den Abgasdruckwandler und durch den Bypasskanal des ausstoßenden Abgasleitabschnitts. Der Abgasgegendruck ist in diesem Fall reduziert.

Im Teillastbetrieb kann durch eine geeignete Stellung des Steuerelements bzw. Regelelements die Restgasrate und somit auch ein Übersprechen des Abgaspulses durch die Bypasskanäle beeinflusst werden. Insbesondere kann durch geeignete Stellung im Teillastbetrieb eine vorteilhafte erhöhte Restgasrate bewirkt werden.

In einer weiteren praktischen Ausführungsform einer erfindungsgemäßen Anordnung führen der erste Bypasskanal und der zweite Bypasskanal zu einem gemeinsamen Steuer- und/oder Regelelement. Bei dem Regelelement kann es sich insbesondere um ein Ventil, vorzugsweise ein einfaches Tellerventil, handeln, das durch seine Öffnungs- bzw. Schließstellung den Zustand der beiden Bypasskanäle festlegt. Diese Ausführungsform ist insbesondere dann konstruktiv besonders einfach aufgebaut und mit geringen Kosten umsetzbar, wenn der erste Bypasskanal und der zweite Bypasskanal beide an einem gemeinsamen Ventil münden. Ein weiterer Vorteil dieser Ausführungsform besteht darin, dass ein Übersprechen von dem ersten Bypasskanal zu dem zweiten Bypasskanal bei geschlossenem Steuer- und/oder Regelelement nahezu ausgeschlossen werden kann, wenn der erste Bypasskanal und der zweite Bypasskanal so an das Steuer- und/oder Regelelement angebunden sind, dass bei geschlossenem Steuer- und/oder Regelelement keine Verbindung zwischen dem ersten Bypasskanal und dem zweiten Bypasskanal hergestellt ist. Im Teillastbetrieb hingegen ergibt sich ein besonders breiter Variationsbereich der darstellbaren Restgasrate, da in diesem Fall über die Bypasskanäle ein stärkeres Übersprechen erzielt wird als bei Ausführungsform mit separaten Steuer- und/oder Regelelementen für jeden Bypasskanal.

In einer anderen Weiterbildung vor vorstehend beschriebenen Ausführungsform einer erfindungsgemäßen Anordnung sind der erste Bypasskanal und der zweite Bypasskanal vor einem gemeinsamen Steuer- und/oder Regelelement zusammengeführt, so dass nur eine Fluidleitung zu dem Steuer- und/oder Regelelement führt. Die Zusammenführung kann insbesondere mittels eines zusätzlichen Abgasdruckwandlers erfolgen. Dieser Abgasdruckwandler ist vorzugsweise so aufgebaut, wie der Abgasdruckwandler im Bereich der Zusammenführung des ersten Abgasleitabschnitts und des zweiten Abgasleitabschnitts, so dass ein im Bereich des zusätzlichen Abgasdruckwandlers angeordnetes Mischrohr zu einem gemeinsamen Steuer- und/oder Regelelement geführt ist. In diesem Fall wird einem Übersprechen im Bereich der Bypasskanäle durch den zusätzlichen Abgasdruckwandler auch dann entgegengewirkt, wenn der erste Bypasskanal und der zweite Bypasskanal geöffnet sind. Es wird darauf hingewiesen, dass anstelle eines zusätzlichen Abgasdruckwandlers auch eine einfache Strömungszusammenführung des ersten Bypasskanales und des zweiten Bypasskanales vor einem gemeinsamen Steuer- und/oder Regelelement ausgebildet sein kann. Wenn der erste Bypasskanal und der zweite Bypasskanal vor dem gemeinsamen Steuer- und/oder Regelelement zusammengeführt sind, ergibt sich unabhängig davon, ob ein zusätzlicher Abgasdruckwandler vorgesehen ist, der Vorteil, dass auf das Steuer- und/oder Regelelement, insbesondere ein Tellerventil, nur ein Abgasstrom einwirkt, so dass ein ungleicher Abgasgegendruck, beispielsweise durch Regelabweichungen, vermieden werden kann.

In einer weiteren praktischen Ausführungsform ist für den ersten Bypasskanal ein erstes Steuer- und/oder Regelelement vorgesehen und für den zweiten Bypasskanal ein zweites Steuer- und/oder Regelelement vorgesehen. Bei dieser Ausführungsform wird ebenfalls ein Übersprechen der durch die Bypasskanäle strömenden Fluten bei geschlossenem Steuer- und/oder Regelelement reduziert. Darüber hinaus können die Volumenströme durch den ersten Bypasskanal und durch den zweiten Bypasskanal separat gesteuert bzw. geregelt werden, so dass etwaigen Druckunterschieden in dem ersten Bypasskanal und in dem zweiten Bypasskanal durch eine individuelle Stellung des jeweiligen Steuer- und/oder Regelelements Rechnung getragen werden kann.

In einer weiteren praktischen Ausführungsform, bei welcher für den ersten Bypasskanal ein erstes Steuer- und/oder Regelelement vorgesehen ist und für den zweiten Bypasskanal ein zweites Steuer- und/oder Regelelement vorgesehen ist, sind der erste Bypasskanal und der zweite Bypasskanal jeweils stromaufwärts des ersten Steuer- und/oder Regelelements und stromaufwärts des zweiten Steuer- und/oder Regelelements mittels eines zusätzlichen Abgasdruckwandlers zusammengeführt. Diese Ausführungsform hat den Vorteil, dass ein Übersprechen zwischen den Fluten von dem ersten Bypasskanal auf den zweiten Bypasskanal oder umgekehrt bei geschlossenem Steuer- und/oder Regelelement nicht möglich ist. Darüber hinaus ergibt sich eine konstruktive Vereinfachung für die Einleitung des durch das erste Steuer- und/oder Regelelement und durch das zweite Steuer- und/oder Regelelement geströmten Abgases zu einer Abgasanlage.

In einer weiteren praktischen Ausführungsform einer erfindungsgemäßen Anordnung ist das Mischrohr mindestens eines Abgasdruckwandlers zumindest teilweise als Diffusor ausgebildet, oder es ist stromabwärts des Mischrohres mindestens eines Abgasdruckwandlers ein Diffusor angeordnet. Durch eine solche Anordnung kann eine durch den Abgasdruckwandler bewirkte Umwandlung von statischem Druck in dynamischen Druck teilweise oder vollständig rückgängig gemacht werden, um Reibungsverluste aufgrund großer Strömungsgeschwindigkeiten im weiteren Strömungsverlauf des Abgases zu reduzieren.

Die Teilmenge der Zylinder, mit welchen der erste Abgasleitabschnitt verbunden ist, und die Teilmenge der Zylinder, mit welchen der zweite Abgasleitabschnitt verbunden ist, ist vorzugsweise gleich groß, d.h. bei einem 4-Zylindermotor wird vorzugsweise eine erste Teilmenge aus zwei Zylindern und eine zweite Teilmenge aus zwei Zylindern gebildet, bei einem 6-Zylindermotor eine erste Teilmenge aus drei Zylindern und eine zweite Teilmenge aus drei Zylindern oder drei Teilmengen aus jeweils zwei Zylindern etc. Jeder Zylinder wird weiter bevorzugt nur genau einer Teilmenge zugeordnet.

In Ergänzung oder alternativ zu vorstehender Zuordnungsregel sind die Zylinder dem ersten Abgasleitabschnitt und dem mindestens zweiten Abgasleitabschnitt (und etwaigen weiteren Abgasleitabschnitten) vorzugsweise so zugeordnet, dass der zeitliche Abstand zwischen den Abgasausstoßzeitpunkten zwischen den dem ersten Abgasleitabschnitt zugeordneten Zylindern und der zeitliche Abstand zwischen den Abgasausstoßzeitpunkten zwischen den dem mindestens zweiten Abgasleitabschnitt zugeordneten Zylindern gleich groß ist.

Die Erfindung betrifft auch ein Verfahren zum Betreiben von wie vorstehend beschriebenen Anordnungen, gemäß welchem in einem unteren Drehzahlbereich des Verbrennungsmotors zwischen 800 U/min und 3.000 U/min der erste Bypasskanal und der mindestens zweite Bypasskanal geschlossen sind und in einem hohen Drehzahlbereich der erste Bypasskanal und der mindestens zweite Bypasskanal mittels mindestens eines Steuer- und/oder Regelelements mindestens teilweise geöffnet werden. Auf die diesbezüglichen Vorteile, die vorstehend bereits in Verbindung mit der erfindungsgemäßen Anordnung beschrieben wurden, wird hiermit noch einmal verwiesen.

Die Erfindung betrifft darüber hinaus ein Verfahren zur Auslegung von wie vorstehend beschriebenen Anordnungen, gemäß welchen ausgehend von bestehenden Parametern eines Verbrennungsmotors, insbesondere dem Durchmesser und der Position des ersten Abgasleitabschnitts, des mindestens zweiten Abgasleitabschnitts und des Mischrohres im Wege einer Simulationsberechnung (Motorprozess- und Ladungswechselsimulation) die Verjüngungsgeometrie für einen ersten Abgasleitabschnitt und für einen mindestens zweiten Abgasleitabschnitt in einem unteren Drehzahlbereich zwischen 800 U/min und 3.000 U/min für einen Drehzahlpunkt bei geschlossenem ersten Bypasskanal und bei geschlossenem mindestens zweiten Bypasskanal optimiert wird und anschließend ausgehend von dem Ergebnis eine Optimierung des ersten Bypasses und des mindestens zweiten Bypasses in Bezug auf eine Reduzierung der Restgasmenge und des Abgasgegendrucks durchgeführt wird. Bei der Optimierung der Bypässe wird insbesondere der Querschnitt der Bypässe so festgelegt, dass der Durchmesser ausreichend groß ist, um ohne zusätzliche Hilfsmittel bei Betrieb des Verbrennungsmotors die maximal gewünschte Abgasmenge durch die Bypässe führen zu können. Darüber hinaus wird eine Steuerungsoptimierung bzw. Regelungsoptimierung für das Steuer- und/oder Regelelement durchgeführt, um die Restgasmenge und den Abgasgegendruck gegenüber einer Ausgangssituation zu reduzieren. Als geeigneter Drehzahlpunkt zwischen 800 und 3.000 U/min kann insbesondere der sogenannte LET-Punkt gewählt werden.

Der vorstehend genannte untere Drehzahlbereich kann auch auf 800 U/min bis 2.000 U/min und besonders bevorzugt auf 1.000 U/min bis 1.500 U/min begrenzt sein. Ein oberer Drehzahlbereich schließt sich unmittelbar an den jeweiligen unteren Drehzahlbereich an und erstreckt sich insbesondere bis zur maximalen Drehzahl des jeweiligen Verbrennungsmotors. Diese kann beispielsweise bei 5.000 U/min, 6.000 U/min, 7.000 U/min oder 8.000 U/min liegen.

Weitere praktische Ausführungsformen und Vorteile der Erfindung sind nachfolgend im Zusammenhang mit den Zeichnungen beschrieben. Es zeigen:
- Fig. 1: eine aus der Praxis bekannte Anordnung für einen Verbrennungsmotor mit mehreren Zylindern und Abgasturbolader, einem zwischen Verbrennungsmotor und einer Turbine des Abgasturboladers angeordneten Abgasdruckwandler mit Mischrohr und einem Wastegate gemäß dem Stand der Technik,
- Fig. 2: eine erfindungsgemäße Anordnung für einen Verbrennungsmotor mit mehreren Zylindern und Abgasturbolader, einem zwischen Verbrennungsmotor und einer Turbine des Abgasturboladers angeordneten Abgasdruckwandler mit Mischrohr und einem Wastegate in einer ersten Ausführungsform,
- Fig. 3: ein Restgas-Drehzahl-Diagramm mit Berechnungsergebnissen für eine Anordnung ohne Abgasdruckwandler, eine Anordnung gemäß Figur 1 und eine Anordnung gemäß Figur 2,
- Fig. 4: ein Abgasgegendruck-Drehzahl-Diagramm mit Berechnungsergebnissen für eine Anordnung ohne Abgasdruckwandler, eine Anordnung gemäß Figur 1 und eine Anordnung gemäß Figur 2,
- Fig. 5: eine erfindungsgemäße Anordnung für einen Verbrennungsmotor mit mehreren Zylindern und Abgasturbolader, einem zwischen Verbrennungsmotor und einer Turbine des Abgasturboladers angeordneten Abgasdruckwandler mit Mischrohr und einem Wastegate in einer zweiten Ausführungsform,
- Fig. 6: eine erfindungsgemäße Anordnung für einen Verbrennungsmotor mit mehreren Zylindern und Abgasturbolader, einem zwischen Verbrennungsmotor und einer Turbine des Abgasturboladers angeordneten Abgasdruckwandler mit Mischrohr und einem Wastegate in einer dritten Ausführungsform und
- Fig. 7: eine erfindungsgemäße Anordnung für einen Verbrennungsmotor mit mehreren Zylindern und Abgasturbolader, einem zwischen Verbrennungsmotor und einer Turbine des Abgasturboladers angeordneten Abgasdruckwandler mit Mischrohr und einem Wastegate in einer vierten Ausführungsform,

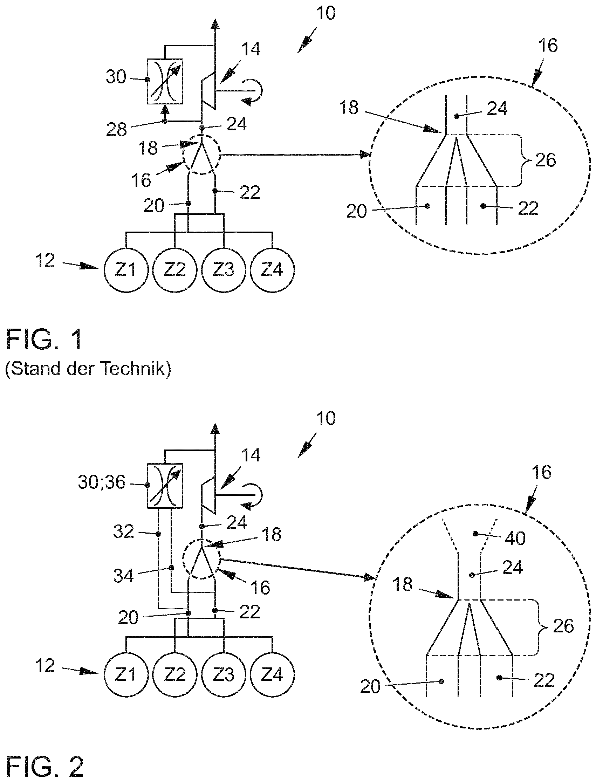

Figur 1 zeigt eine aus der Praxis bekannte Anordnung 10 für einen schematisch dargestellten Verbrennungsmotor 12 mit vier Zylindern Z1, Z2, Z3, Z4, mit einem Abgasturbolader, von welchem in Figur 1 nur eine stromabwärts des Verbrennungsmotors 12 angeordnete Turbine 14 dargestellt ist. Die Anordnung 10 umfasst ferner einen zwischen dem Verbrennungsmotor 12 und der Turbine 14 des Abgasturboladers angeordneten Abgasdruckwandler 16, der rechts neben der in Figur 1 gezeigten Anordnung 10 noch einmal vergrößert dargestellt ist.

Der Abgasdruckwandler 16 umfasst eine Mündungsstelle 18, an welcher ein von den Zylindern Z1 und Z4 kommender erster Abgasleitabschnitt 20 und ein von den Zylindern Z2 und Z3 kommender zweiter Abgasleitabschnitt 22 in ein gemeinsames Mischrohr 24 zusammengeführt sind.

Wie in der vergrößerten Darstellung rechts in Figur 1 erkennbar ist, ist in einem Endbereich 26 des ersten Abgasleitabschnitts 20 und des zweiten Abgasleitabschnitts 22 unmittelbar vor der Mündungsstelle 18 jeweils eine signifikante Verjüngung sowohl in dem ersten Abgasleitabschnitt 20 als auch in dem zweiten Abgasleitabschnitt 22 ausgebildet.

Stromabwärts der Mündungsstelle 18, jedoch vor der Turbine 14 zweigt ein zu einem Wastegate 30 führender Bypasskanal 28 ab und ermöglicht es, bei geöffnetem Wastegate 30 Abgas bedarfsweise an der Turbine 14 des Abgasturboladers vorbeizuführen.

Im Folgenden werden unter Bezugnahme auf vorstehend beschriebenen Elemente aus Figur 1 verschiedene erfindungsgemäße Anordnungen beschrieben. Dabei werden für identische oder zumindest funktionsgleiche Elemente die gleichen Bezugszeichen wie in Figur 1 verwendet.

Die in Figur 2 gezeigte erfindungsgemäße Anordnung gemäß einer ersten Ausführungsform unterscheidet sich von der in Figur 1 gezeigten Anordnung insbesondere dadurch, dass bereits von dem ersten Abgasleitabschnitt 20 stromaufwärts des Endbereichs 26 ein erster Bypasskanal 32 abzweigt und von dem zweiten Abgasleitabschnitt 22 stromaufwärts des Endbereichs 26 ein zweiter Bypasskanal 34 abzweigt. Der erste Bypasskanal 32 und der zweite Bypasskanal 34 führen zu einem gemeinsamen Steuerelement 36 (das alternativ in allen beschriebenen Ausführungsformen erfindungsgemäßer Anordnungen auch ein Regelelement sein kann) und welches in geöffneter Stellung als Wastegate 30 dient. Bei dem Steuerelement 36 handelt es sich in der gezeigten Ausführungsform um ein Tellerventil. Durch zumindest teilweises Öffnen des Tellerventils werden gleichzeitig der erste Bypasskanal 32 und der zweite Bypasskanal 34 geöffnet, so dass Abgas über das Wastegate 30 an der Turbine 14 des Abgasturboladers vorbeiströmen kann. In Figur 2 ist auch zu erkennen, dass das Mischrohr 24 optional zumindest teilweise als Diffusor 40 (gestrichelt dargestellt) ausgebildet sein kann.

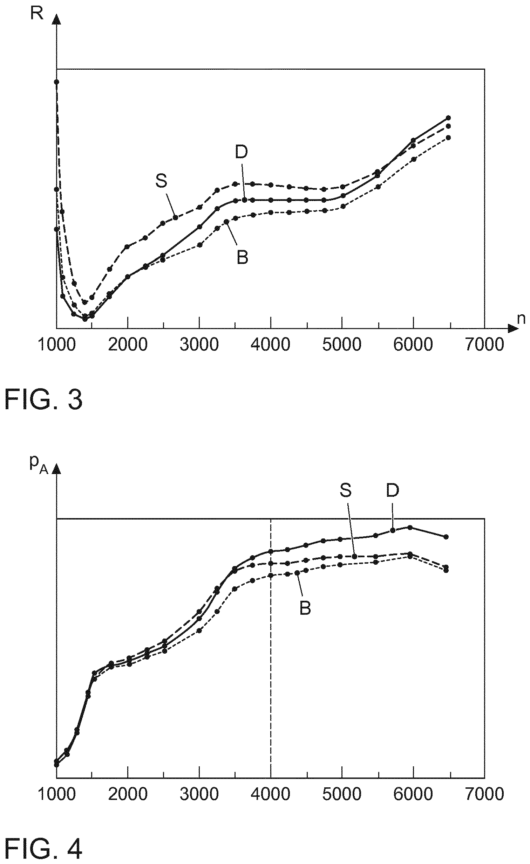

In Figur 3 ist der prozentuale Restgasanteil R und in Figur 4 der Abgasgegendruck p_{A} jeweils qualitativ über der Drehzahl n für verschiedene Anordnungen von Verbrennungsmotoren dargestellt. Die Kurven S zeigen den Restgasanteil R (Figur 3) bzw. Abgasgegendruck p_{A} (Figur 4) für eine Anordnung eines Serien-Verbrennungsmotors ohne Abgasdruckwandler, die Kurven D für die Anordnung gemäß Figur 1 und die Kurven B für die Anordnung gemäß Figur 2. Es ist klar erkennbar, dass mit der erfindungsgemäßen Anordnung 10 gemäß Figur 2 der Restgasanteil und der Abgasgegendruck über den gesamten Drehzahlbereich der Verbrennungsmotors 12 geringer gehalten werden können als bei den aus dem Stand der Technik bekannten Anordnungen 10.

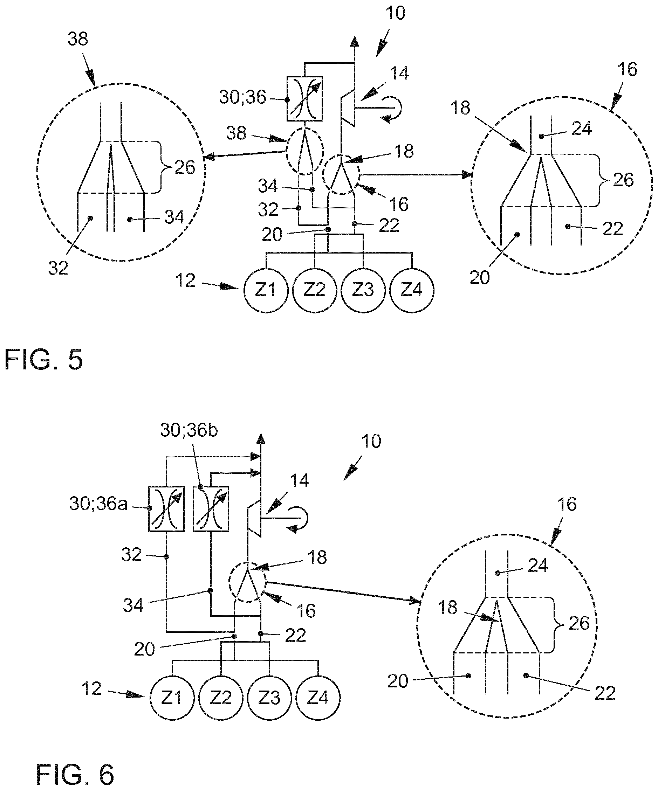

In den Figuren 5-7 sind weitere Ausführungsformen erfindungsgemäßer Anordnungen 10 dargestellt.

Die in Figur 5 gezeigte Anordnung 10 unterscheidet sich von der in Figur 2 gezeigten Anordnung 10 insbesondere dadurch, dass der erste Bypasskanal 32 und der zweite Bypasskanal 34 zunächst mittels eines zweiten Abgasdruckwandlers 38 zusammengeführt und dann in das als Wastegate 30 dienende Steuerelement 36 geführt werden.

Bei der in Figur 6 gezeigten Anordnung 10 führen der erste Bypasskanal 32 und der zweite Bypasskanal 34 zu einem ersten Steuerelement 36a und einem zweiten Steuerelement 36b, so dass die Volumenströme in dem ersten Bypasskanal 32 und in dem zweiten Bypasskanal 34 separat steuerbar sind.

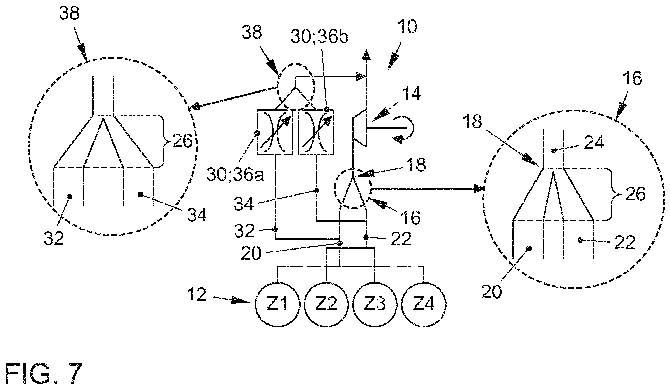

Bei der in Figur 7 gezeigten Anordnung 10 ist im Vergleich zu der in Figur 6 gezeigten Anordnung ein zweiter Abgasdruckwandler 38 stromabwärts der Steuerelemente 36a, 36b angeordnet.

Die in den Figuren 5 und 7 gezeigten zweiten Abgaswandler 38 sind in den gezeigten Ausführungsformen vom Grundaufbau so gestaltet wie die ersten Abgasdruckwandler 16. Die Endabschnitte 26 mit der sich verjüngenden Geometrie wurden daher jeweils mit dem gleichen Bezugszeichen versehen. Es wird jedoch darauf hingewiesen, dass die Verjüngungsgeometrie im Bereich des zweiten Abgasdruckwandlers 16 und des ersten Abgasdruckwandlers unterschiedlich gestaltet sein kann, um diese jeweils für spezielle Punkte des Motorkennfeldes eines Verbrennungsmotors zu optimieren.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Anordnung
- 12: Verbrennungsmotor
- 14: Turbine
- 16: Abgasdruckwandler
- 18: Mündungsstelle
- 20: erster Abgasleitabschnitt
- 22: zweiter Abgasleitabschnitt
- 24: Mischrohr
- 26: Endbereich
- 28: Bypasskanal (nach Abgasdruckwandler gemäß Stand der Technik)
- 30: Wastegate
- 32: erster Bypasskanal
- 34: zweiter Bypasskanal
- 36: Steuerelement
- 36a: erstes Steuerelement
- 36b: zweites Steuerelement
- 38: zweiter Abgasdruckwandler
- 40: Diffusor

## Patentansprüche

1. Anordnung für einen Verbrennungsmotor (12) mit mehreren Zylindern und Abgasturbolader, einem zwischen Verbrennungsmotor (12) und einer Turbine (14) des Abgasturboladers angeordneten Abgasdruckwandler (16) mit einem Mischrohr (24) sowie mit einem die Turbine (14) des Abgasturboladers umgehenden Wastegate (30), wobei die Anordnung einen ersten Abgasleitabschnitt (20) zum separaten Ableiten von Abgas aus einer ersten Teilmenge der Zylinder zu dem Mischrohr (24) und mindestens einen zweiten Abgasleitabschnitt (22) zum Ableiten von Abgas aus einer zweiten Teilmenge der Zylinder zu dem Mischrohr (24) umfasst, wobei in dem ersten Abgasleitabschnitt (20) und in dem zweiten Abgasleitabschnitt (22) in einem jeweiligen Endbereich (26) vor dem Mischrohr (24) jeweils ein düsenartiger Abschnitt ausgebildet ist, wobei von dem ersten Abgasleitabschnitt (20) vor oder in dem düsenartigen Abschnitt ein den Abgasturbolader umgehender erster Bypasskanal (32) ausgebildet ist, wobei von dem mindestens zweiten Abgasleitabschnitt (22) vor oder in dem düsenartigen Abschnitt ein den Abgasturbolader umgehender zweiter Bypasskanal (34) ausgebildet ist und wobei mindestens ein Steuer- und/oder Regelelement (36) vorgesehen ist, mittels welchem die Durchflussmenge durch den ersten Bypasskanal (32) und/oder durch den zweiten Bypasskanal (34) steuerbar bzw. regelbar ist.

2. Anordnung nach dem vorstehenden Anspruch, **dadurch gekennzeichnet, dass** der erste Bypasskanal (32) und der zweite Bypasskanal (34) zu einem gemeinsamen Steuer- und/oder Regelelement (36) führen.

3. Anordnung nach dem vorstehenden Anspruch, **dadurch gekennzeichnet, dass** der erste Bypasskanal (32) und der zweite Bypasskanal (34) vor dem gemeinsamen Steuer- und/oder Regelelement (36) zusammengeführt sind.

4. Anordnung nach Anspruch 1, **dadurch gekennzeichnet, dass** für den ersten Bypasskanal (32) ein erstes Steuer- und/oder Regelelement (36a) vorgesehen ist und für den zweiten Bypasskanal (34) ein zweites Steuer- und/oder Regelelement (36b) vorgesehen ist.

5. Anordnung nach dem vorstehenden Anspruch, **dadurch gekennzeichnet, dass** der erste Bypasskanal (32) und der zweite Bypasskanal (34) jeweils stromaufwärts des ersten Steuer- und/oder Regelelement (36a) und stromaufwärts des zweiten Steuer- und/oder Regelelements (36b) mittels eines zusätzlichen Abgasdruckwandlers (38) zusammengeführt sind.

6. Anordnung nach einem oder mehreren der vorstehenden Ansprüche, **dadurch gekennzeichnet, dass** das Mischrohr (24) mindestens eines Abgasdruckwandlers (16) zumindest teilweise als Diffusor ausgebildet ist oder dass stromabwärts des Mischrohres (24) mindestens eines Abgasdruckwandlers (16) ein Diffusor angeordnet ist.

7. Anordnung nach einem oder mehreren der vorstehenden Ansprüche, **dadurch gekennzeichnet, dass** die Teilmenge der Zylinder, mit welchen der erste Abgasleitabschnitt (20) verbunden ist und die Teilmenge der Zylinder, mit welchen der zweite Abgasleitabschnitt (22) verbunden ist, gleich groß ist.

8. Anordnung nach einem oder mehreren der vorstehenden Ansprüche, **dadurch gekennzeichnet, dass** die Zylinder dem ersten Abgasleitabschnitt (20) und dem mindestens zweiten Abgasleitabschnitt (22) so zugeordnet sind, dass bei Normalbetrieb des Verbrennungsmotors (12) der zeitliche Abstand zwischen den Abgasausstoßzeitpunkten zwischen den dem ersten Abgasleitabschnitt (20) zugeordneten Zylindern und der zeitliche Abstand zwischen den Abgasausstoßzeitpunkten zwischen den dem mindestens zweiten Abgasleitabschnitt (22) zugeordneten Zylindern gleich groß ist.

9. Verfahren zum Betreiben einer Anordnung (10) nach einem der Ansprüche 1-8, gemäß welchem in einem unteren Drehzahlbereich des Verbrennungsmotors (12) zwischen 800 und 3.000 U/min der erste Bypasskanal (32) und der mindestens zweite Bypasskanal (34) geschlossen sind und in einem hohen Drehzahlbereich der erste Bypasskanal (32) und der mindestens zweite Bypasskanal (34) mittels mindestens eines Steuer- und/oder Regelelements (36) mindestens teilweise geöffnet werden.

10. Verfahren zur Auslegung einer Anordnung (10) nach einem der Ansprüche 1-8, gemäß welchem ausgehend von bestehenden Parametern eines Verbrennungsmotors (12) im Wege einer Simulationsrechnung die Verjüngungsgeometrie für einen ersten Abgasleitabschnitt (20) und für einen mindestens zweiten Abgasleitabschnitt (22) in einem unteren Drehzahlbereich des Verbrennungsmotors (12) zwischen 800 und 3.000 U/min für einen Punkt des Motorkennfeldes bei geschlossenem ersten Bypasskanal (32) und bei geschlossenem mindestens zweiten Bypasskanal (34) optimiert wird und anschließend ausgehend von dem Ergebnis eine Optimierung des ersten Bypasses (32) und des mindestens zweiten Bypasses (34) in Bezug auf eine Reduzierung der Restgasmenge und des Abgasgegendrucks durchgeführt wird.

## Claims

1. Arrangement for an internal combustion engine (12) having a plurality of cylinders and an exhaust gas turbocharger, an exhaust gas pressure transducer (16) which is arranged between the internal combustion engine (12) and a turbine (14) of the exhaust gas turbocharger, having a mixing pipe (24) and having a wastegate (30) which bypasses the turbine (14) of the exhaust gas turbocharger, the arrangement comprising a first exhaust gas conducting section (20) for the separate discharge of exhaust gas from a first part quantity of the cylinders to the mixing pipe (24) and at least one second exhaust gas conducting section (22) for the discharge of exhaust gas from a second part quantity of the cylinders to the mixing pipe (24), in each case one nozzle-like section being configured in the first exhaust gas conducting section (20) and in the second exhaust gas conducting section (22) in a respective end region (26) upstream of the mixing pipe (24), a first bypass channel (32) which bypasses the exhaust gas turbocharger being configured from the first exhaust gas conducting section (20) upstream of or in the nozzle-like section, a second bypass channel (34) which bypasses the exhaust gas turbocharger being configured from the at least one second exhaust gas conducting section (22) upstream of or in the nozzle-like section, and at least one control and/or regulating element (36) being provided, by means of which the throughflow quantity through the first bypass channel (32) and/or through the second bypass channel (34) can be controlled or regulated.

2. Arrangement according to the preceding claim, **characterized in that** the first bypass channel (32) and the second bypass channel (34) lead to a common control and/or regulating element (36).

3. Arrangement according to the preceding claim, **characterized in that** the first bypass channel (32) and the second bypass channel (34) are combined upstream of the common control and/or regulating element (36).

4. Arrangement according to Claim 1, **characterized in that** a first control and/or regulating element (36a) is provided for the first bypass channel (32), and a second control and/or regulating element (36b) is provided for the second bypass channel (34).

5. Arrangement according to the preceding claim, **characterized in that** the first bypass channel (32) and the second bypass channel (34) are combined in each case upstream of the first control and/or regulating element (36a) and upstream of the second control and/or regulating element (36b) by means of an additional exhaust gas pressure transducer (38).

6. Arrangement according to one or more of the preceding claims, **characterized in that** the mixing pipe (24) of at least one exhaust gas pressure transducer (16) is configured at least partially as a diffuser, or **in that** a diffuser is arranged downstream of the mixing pipe (24) of at least one exhaust gas pressure transducer (16).

7. Arrangement according to one or more of the preceding claims, **characterized in that** the part quantity of cylinders, to which the first exhaust gas conducting section (20) is connected, and the part quantity of cylinders, to which the second exhaust gas conducting section (22) is connected, are of equal magnitude.

8. Arrangement according to one or more of the preceding claims, **characterized in that** the cylinders are assigned to the first exhaust gas conducting section (20) and to the at least one second exhaust gas conducting section (22) in such a way that, in the case of normal operation of the internal combustion engine (12), the time interval between the exhaust gas expulsion times between the cylinders which are assigned to the first exhaust gas conducting section (20) and the time interval between the exhaust gas expulsion times between the cylinders which are assigned to the at least one second exhaust gas conducting section (22) are of equal magnitude.

9. Method for operating an arrangement (10) according to one of Claims 1 to 8, in accordance with which method, in a lower rotational speed range of the internal combustion engine (12) between 800 and 3000 rpm, the first bypass channel (32) and the at least one second bypass channel (34) are closed and, in a high rotational speed range, the first bypass channel (32) and the at least one second bypass channel (34) are opened at least partially by means of at least one control and/or regulating element (36).

10. Method for designing an arrangement (10) according to one of Claims 1 to 8, in accordance with which method, starting from existing parameters of an internal combustion engine (12), the tapering geometry for a first exhaust gas conducting section (20) and for an at least one second exhaust gas conducting section (22) is optimized, by way of a simulation calculation, in a lower rotational speed range of the internal combustion engine (12) between 800 and 3000 rpm for a point of the engine map in the case of a closed first bypass channel (32) and in the case of a closed at least one second bypass channel (34), and subsequently, starting from the result, an optimization of the first bypass (32) and the at least one second bypass (34) is carried out in relation to a reduction of the residual gas quantity and the exhaust gas back pressure.

## Revendications

1. Dispositif pour un moteur à combustion interne (12) équipé de plusieurs cylindres et d'un turbocompresseur, d'un capteur de pression de gaz d'échappement (16) disposé entre le moteur à combustion interne (12) et une turbine (14) du turbocompresseur et comportant un tube de mélange (24), ainsi que d'une soupape de décharge (30) contournant la turbine (14) du turbocompresseur, dans lequel le dispositif comprend une première partie de tuyau d'échappement (20) pour l'évacuation séparée de gaz d'échappement hors d'une première quantité partielle des cylindres vers le tube de mélange (24) et au moins une seconde partie de tuyau d'échappement (22) pour l'évacuation de gaz d'échappement hors d'une seconde quantité partielle des cylindres vers le tube de mélange (24), dans lequel une partie en forme de buse est formée respectivement dans la première partie de tuyau d'échappement (20) et dans la seconde partie de tuyau d'échappement (22) dans une région d'extrémité respective (26) avant le tube de mélange (24), dans lequel un premier canal de dérivation (32) contournant le turbocompresseur est formé par la première partie de tuyau d'échappement (20) avant ou dans la partie en forme de buse, dans lequel un second canal de dérivation (34) contournant le turbocompresseur est formé par ladite au moins une seconde partie de tuyau d'échappement avant ou dans la partie en forme de buse, et dans lequel il est prévu au moins un élément de commande et/ou de régulation (36), au moyen duquel le débit à travers le premier canal de dérivation (32) et/ou à travers le second canal de dérivation (34) peut être commandé ou régulé.

2. Dispositif selon la revendication précédente, **caractérisé en ce que** le premier canal de dérivation (32) et le second canal de dérivation (34) conduisent à un élément de commande et/ou de régulation commun (36).

3. Dispositif selon la revendication précédente, **caractérisé en ce que** le premier canal de dérivation (32) et le second canal de dérivation (34) sont réunis avant l'élément de commande et/ou de régulation commun (36) .

4. Dispositif selon la revendication 1, **caractérisé en ce qu'**il est prévu un premier élément de commande et/ou de régulation (36a) pour le premier canal de dérivation (32) et il est prévu un second élément de commande et/ou de régulation (36b) pour le second canal de dérivation (34).

5. Dispositif selon la revendication précédente, **caractérisé en ce que** le premier canal de dérivation (32) et le second canal de dérivation (34) sont réunis respectivement en amont du premier élément de commande et/ou de régulation (36a) et en amont du second élément de commande et/ou de régulation (36b) au moyen d'un capteur de pression de gaz d'échappement supplémentaire (38) .

6. Dispositif selon une ou plusieurs des revendications précédentes, **caractérisé en ce que** le tube de mélange (24) d'au moins un capteur de pression de gaz d'échappement (16) est réalisé au moins en partie sous forme de diffuseur ou **en ce qu'**un diffuseur est disposé en aval du tube de mélange (24) d'au moins un capteur de pression de gaz d'échappement (16).

7. Dispositif selon une ou plusieurs des revendications précédentes, **caractérisé en ce que** la quantité partielle des cylindres, auxquels la première partie de tuyau d'échappement (20) est raccordée et la seconde quantité partielle des cylindres, auxquels la seconde partie de tuyau d'échappement (22) est raccordée, sont de valeur égale.

8. Dispositif selon une ou plusieurs des revendications précédentes, **caractérisé en ce que** les cylindres sont associés à la première partie de tuyau d'échappement (20) et à ladite au moins une seconde partie de tuyau d'échappement (22) de telle manière qu'en fonctionnement normal du moteur à combustion interne (12) la distance temporelle entre les instants d'expulsion de gaz d'échappement entre les cylindres associés à la première partie de tuyau d'échappement (20) et la distance temporelle entre les instants d'échappement entre les cylindres associés à ladite au moins une seconde partie de tuyau d'échappement (22) sont de valeur égale.

9. Procédé de fonctionnement d'un dispositif (10) selon l'une quelconque des revendications 1 à 8, selon lequel dans une plage inférieure du nombre de tours du moteur à combustion interne (12) entre 800 et 3000 tours par minute le premier canal de dérivation (32) et ledit au moins un second canal de dérivation (34) sont fermés et dans une plage supérieure du nombre de tours le premier canal de dérivation (32) et ledit au moins un second canal de dérivation (34) sont au moins partiellement ouverts au moyen d'au moins un élément de commande et/ou de régulation (36).

10. Procédé de conception d'un dispositif (10) selon l'une quelconque des revendications 1 à 8, selon lequel, en partant de paramètres existants d'un moteur à combustion interne (12) au cours d'un calcul de simulation on optimise la géométrie de rétrécissement pour une première partie de tuyau d'échappement (20) et pour au moins une seconde partie de tuyau d'échappement (22) dans une plage inférieure de nombre de tours du moteur à combustion interne (12) entre 800 et 3000 tours par minute pour un point du diagramme caractéristique du moteur avec le premier canal de dérivation fermé (32) et avec ledit au moins un second canal de dérivation fermé (34), et on effectue ensuite, en partant du résultat, une optimisation du premier canal de dérivation (32) et dudit au moins un second canal de dérivation (34) par rapport à une réduction du débit de gaz résiduel et de la contrepression du gaz d'échappement.
